# EUROPÄISCHE PATENTANMELDUNG

(11) **EP 1 574 380 A2**
(43) Veröffentlichungstag der Anmeldung: **14.09.2005**
(21) Anmeldenummer: 05004252.2
(22) Anmeldetag: 26.02.2005
(51) Int. Cl.: B60K 15/04

(54) **Tankverschluss**

(30) Priorität: 09.03.2004 DE 102004011753
(71) Anmelder: Tesma Europa GmbH, 41516 Grevenbroich (DE)
(72) Erfinder: Scharrer, Konrad H., 40721 Hilden (DE)
(74) Vertreter: Paul, Dieter-Alfred

(57) **Zusammenfassung**

Die Erfindung betrifft einen Tankverschluß (1) mit einem ersten und einem zweiten Verschlußglied (9, 18), die gegen die Wirkung einer Rückstelleinrichtung (14, 23) aus einer Schließ- in eine Offenstellung bewegbar sind, wobei parallel zum zweiten Verschlußglied (18) ein Bypass (28) mit einem darin angeordneten Belüftungsventil (25) vorgesehen ist, das mit dem ersten Verschlußglied (9) verbunden ist. Die Erfindung ist dadurch gekennzeichnet, daß eine Anschlageinrichtung (38) vorgesehen ist, die ein bewegliches Anschlagelement (47-50) aufweist, das wirkungsmäßig derart mit dem ersten Verschlußglied (9) und/oder dem Belüftungsventil (25) verbunden ist, daß das Anschlagelement (47-50) nach Öffnen des zweiten Verschlußgliedes (18) aus einer Ausgangsstellung so in den Bewegungsbereich des zweiten Verschlußgliedes (18) einfährt, daß bei Bewegung des zweiten Verschlußglieds (18) in Schließrichtung dessen vollständiges Schließen verhindert wird, und daß das Anschlagelement (47-50) mit der Schließbewegung des ersten Verschlußgliedes (9) wieder in die Ausgangsstellung zurückfährt.

## Beschreibung

Die Erfindung betrifft einen Tankverschluß für einen Tankstutzen, der hintereinander ein erstes und ein zweites Verschlußglied aufweist, die durch Einstecken einer Zapfpistole gegen die Wirkung einer Rückstelleinrichtung aus einer Schließ- in eine Offenstellung bewegbar sind, wobei parallel zum zweiten Verschlußglied ein Bypass mit einem darin angeordneten Belüftungsventil vorgesehen ist, das mit dem ersten Verschlußglied derart verbunden ist, daß das Belüftungsventil bei Bewegung des ersten Verschlußgliedes aus dessen Schließstellung in Richtung auf dessen Offenstellung ebenfalls aus einer Schließ- in eine Offenstellung bewegt wird und umgekehrt.

Im Stand der Technik sind Tankstutzen bekannt, die mit einem Tankverschluß versehen sind, bei dem hintereinander ein erstes und ein zweites Verschlußglied angeordnet sind, wobei die Verschlußglieder in der Regel als tellerförmige, schwenkbar aufgehängte Verschlußklappen ausgebildet sind (vgl. WO 00/54999; US 6,009,920 A). Parallel zu dem zweiten Verschlußglied ist ein Bypass mit einem darin angeordneten Belüftungsventil vorgesehen. Das Belüftungsventil ist mit einem in EinFüllrichtung vor der zweiten Verschlußklappe in den Tankstutzen hereinragenden Hebel kinematisch verbunden. Durch Einstecken der Zapfpistole wird der Hebel verschwenkt mit der Folge, daß das Belüftungsventil geöffnet wird, bevor die Zapfpistole das zweite Verschlußglied erreicht. Auf diese Weise entsteht ein Druckausgleich zwischen Kraftstofftank und Atmosphäre mit der Folge, daß beim Aufstoßen des zweiten Verschlußgliedes keine wesentliche Druckdifferenz mehr an diesem herrscht und somit ein Herausspritzen von eventuell auf der Verschlußklappe vorhandenem Kraftstoff vermieden wird.

Bei einer Weiterentwicklung des vorbeschriebenen Tankverschlusses sind die Verschlußglieder so angeordnet, daß sie beide durch Einstecken der Zapfpistole gegen die Wirkung einer Rückstelleinrichtung aus ihrer Schließ- in die die Offenstellung bewegbar sind (vgl. WO 03/086805 A1; EP 1 329 353 A1). Dabei ist das erste Verschlußglied mit dem Belüftungsventil derart verbunden, daß das Belüftungsventil bei Bewegung des ersten Verschlußgliedes aus dessen Schließstellung in Richtung auf dessen Offenstellung ebenfalls aus einer Schließ- in eine Offenstellung bewegt wird und umgekehrt. Zusätzlich ist das erste Verschlußglied mit dem zweiten Verschlußglied kinematisch derart verbunden, daß beim Einstecken der Zapfpistole und damit Öffnen des ersten Verschlußgliedes gleichzeitig auch das zweite Verschlußglied mit geöffnet wird. Umgekehrt bleibt das zweite Verschlußglied beim Herausziehen der Zapfpistole solange geöffnet, bis die Zapfpistole an dem ersten Verschlußglied vorbei herausgezogen worden ist. Auf diese Weise fließt eventuell aus der Zapfpistole noch nachlaufender Restkraftstoff noch in den Tank, d.h. er sammelt sich nicht auf dem zweiten Verschlußglied.

Nachteilig bei dieser Konstruktion ist, daß das Gestänge zur Verbindung des ersten Verschlußgliedes mit dem Belüftungsventil und zu dessen Verbindung mit dem zweiten Verschlußglied sehr einstellungs- und verschleißempfindlich ist. Das Gestänge muß so justiert sein, daß in der Schließstellung auch tatsächlich beide Verschlußglieder und das Belüftungsventil geschlossen sind. Die Erfüllung dieser Forderung bereitet erhebliche Herstellungs- und Einstellungsprobleme.

Der Erfindung liegt somit die Aufgabe zugrunde, einen Tankverschluß der Eingangs genannten Art so auszubilden, daß einerseits gesichert ist, daß in Schließstellung beide Verschlußklappen und auch das Belüftungsventil geschlossen sind, andererseits aber ein Abfließen von aus der Zapfpistole nachfließendem Kraftstoff in den Tank möglich ist.

Diese Aufgabe wird erfindungsgemäß dadurch gelöst, daß eine Anschlageinrichtung vorgesehen ist, die ein bewegliches Anschlagelement aufweist, das wirkungsmäßig derart mit dem ersten Verschlußglied und/oder dem Belüftungsventil verbunden ist, daß das Anschlagelement nach Öffnen des zweiten Verschlußgliedes aus einer Ausgangsstellung so in den Bewegungsbereich des zweiten Verschlußgliedes einfährt, daß bei Bewegung des zweiten Verschlußgliedes in Schließrichtung dessen vollständiges Schließen verhindert wird, und daß das Anschlagelement mit der Schließbewegung des ersten Verschlußgliedes wieder in die Ausgangsstellung zurückfährt.

Grundgedanke der Erfindung ist es also, eine Anschlageinrichtung vorzusehen, die das zweite Verschlußglied am vollständigen Schließen hindert, wenn die Zapfpistole aus dem Tankverschluß herausgezogen wird. Eventuell aus der Zapfpistole nachfließender Kraftstoff kann dann an dem zweiten Verschlußglied vorbei in den Tank abfließen, solange das Anschlagelement ein vollständiges Schließen des zweiten Verschlußgliedes verhindert. Erst mit dem Schließen des ersten Verschlußgliedes wird das Anschlagelement aus dem Bewegungsbereich des zweiten Verschlußgliedes herausbewegt, so daß dann das zweite Verschlußglied ebenfalls schließen kann. Durch das Vorsehen der Anschlageinrichtung ist eine direkte, kinematische Verbindung zwischen erstem und zweitem Verschlußglied nicht mehr erforderlich. Vielmehr besteht die Möglichkeit, das zweite Verschlußglied unabhängig von dem ersten Verschlußglied beweglich zu halten. Damit werden die vorstehend dargestellten Nachteile einer direkten kinematischen Verbindung zwischen erstem und zweitem Verschlußglied vermieden.

In Ausbildung der Erfindung ist vorgesehen, daß das zweite Verschlußglied derart angeordnet ist, daß es beim Einstecken der Zapfpistole durch deren direkte Beaufschlagung aus seiner Schließstellung in die Offenstellung bewegbar ist. Dies schließt nicht aus, daß die Bewegung des zweiten Verschlußgliedes auch mittels eines in den Tankstutzen hineinragenden, mit dem zweiten Verschlußglied kinematisch verbundenen Hebel geschehen kann, wie dies aus der WO 00/54999 A1 bzw. US 6,009,920 A bekannt ist.

Das Anschlagelement als solches kann eine beliebige Formgebung haben, wenn es nur seine vorbeschriebene Funktion erfüllt. Beispielsweise kann das Anschlagelement wenigstens einen Anschlagarm aufweisen, dessen freies Ende in den Bewegungsbereich des zweiten Verschlußgliedes bewegbar ist. Anstatt nur eines Anschlagarms können auch zwei Anschlagarme vorgesehen sein, indem das Anschlagelement gabelförmig ausgebildet ist. Die beiden Anschlagarme sind dann in den Bewegungsbereich des zweiten Verschlußgliedes bewegbar. Zweckmäßigerweise sind sie in der Ebene des zweiten Verschlußgliedes beweglich geführt. Hierzu können die Anschlagarme biegsam ausgebildet und kulissenartig derart geführt sein, daß sie bei Bewegung aus ihrer Ausgangsstellung in den Bewegungsbereich des zweiten Verschlußgliedes gebogen werden.

Nach einem weiteren Merkmal der Erfindung ist vorgesehen, daß das Anschlagelement kinematisch mit dem Belüftungsventil verbunden ist. Dies kann in der Weise geschehen, daß das Belüftungsventil einen Ventilstößel aufweist, der mit dem Anschlagelement und kinematisch mit dem ersten Verschlußglied verbunden ist. Dabei kann der Ventilstößel sich senkrecht zu den Ebenen der Verschlußglieder in deren Schließstellungen erstrecken. Eine besonders zweckmäßige Ausführungsform ergibt sich, wenn Anschlagelemente und Ventilstößel derart miteinander verbunden sind, daß eine Bewegung des Ventilstößels in Öffnungsrichtung eine Verschiebung des Anschlagelements in der Ebene des zweiten Verschlußgliedes in dessen Schließstellung bewirkt und umgekehrt.

Die Verbindung von Anschlagelement und Ventilstößel kann in der Weise vorgesehen sein, daß Anschlagelement und Ventilstößel über gegenseitige Schiebeelemente verbunden sind, wobei das anschlagelementseitige Schiebeelement den Ventilstößel formschlüssig umschließt und der Ventilstößel eine Krümmung aufweist, die bei Bewegung des Ventilstößels eine Verschiebung des Anschlagelements bewirkt. Dabei sollte das Anschlagelement in Richtung seiner Ausgangsstellung federbeaufschlagt sein.

In der Zeichnung ist die Erfindung anhand eines Ausführungsbeispiels näher veranschaulicht. Es zeigen:
- Figur 1: einen Vertikalschnitt durch einen Tankverschluß in der Ebene A-A von Figur 3;
- Figur 2: einen Vertikalschnitt durch den Tankverschluß gemäß Figur 1 in der Ebene B-B von Figur 1;
- Figur 3: eine Unteransicht des Tankverschlusses gemäß den Figuren 1 und 2 in Schließstellung;
- Figur 4: einen Vertikalschnitt durch den Tankverschluß gemäß den Figuren 1 bis 3 in der Ebene C-C von Figur 2;
- Figur 5: einen Querschnitt durch den Tankverschluß gemäß den Figuren 1 bis 4 in der Ebene D-D von Figur 1;
- Figur 6: eine Unteransicht des Tankverschlusses gemäß den Figuren 1 bis 5 bei Offenstellung von erster und zweiter Verschlußklappe;
- Figur 7: einen Vertikalschnitt durch den Tankverschluß gemäß den Figuren 1 bis 6 in der Ebene A-A von Figur 3 mit vollständig eingesteckter Zapfpistole und
- Figur 8: einen Vertikalschnitt durch den Tankverschluß gemäß den Figuren 1 bis 7 in der Darstellung gemäß Figur 7 mit teilweise herausgezogener Zapfpistole.

Der in Figuren dargestellte Tankverschluß 1 weist ein mantelförmiges Außengehäuse 2 aus Stahlblech auf, das unten- und obenseitig offen ist und in das von unten ein Einsatz 3 aus Kunststoff eingesetzt ist. Der Einsatz 3 besteht aus einem Innenteil 4 und einem das Innenteil 4 im unteren Bereich umgebenden Ringteil 5, das in das Außengehäuse 2 kraftschlüssig eingepreßt ist. Innenteil 4 und Ringteil 5 sind über Bajonettstege fest miteinander verbunden. Der Tankverschluß 1 ist dazu bestimmt, mit seinem unteren Ende auf das freie Ende eines hier nicht dargestellten Tankstutzens aufgesetzt zu werden, und bildet dann das verschlußseitige Ende des Tankstutzens.

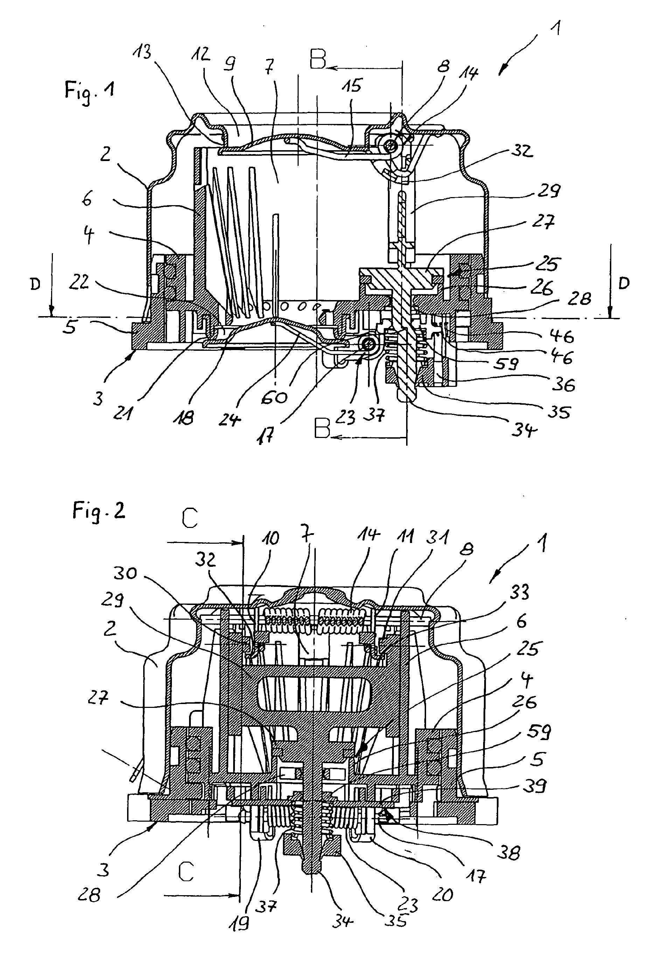

Das Innenteil 4 weist eine im Querschnitt U-förmige Innenteilwandung 6 auf, die im wesentlichen senkrecht hochsteht und einen Durchflußkanal 7 einschließt. Im oberen Bereich wird - wie insbesondere bei Figur 2 zu sehen ist - die offene Seite der Innenkanalwandung 7 durch eine horizontale erste Klappenachse 8 überbrückt. Auf der ersten Klappenachse 8 ist eine tellerförmige erste Verschlußklappe 9 über Lagerstege 10, 11 schwenkbar gelagert. Die erste Verschlußklappe 9 deckt in der Schließstellung (Figuren 1 bis 4) eine Einstecköffnung 12 an der Oberseite des Außengehäuses 2 ab, indem die erste Verschlußklappe 9 von innen an einem Randsteg 13 der Einstecköffnung 12 anliegt.

Zwischen den Lagerstegen 10, 11 ist die erste Klappenachse 8 von den Schraubenwindungen einer Feder 14 umgeben. Mittig bildet die Feder 14 einen Federsteg 15 aus, der sich bis zur Mitte der ersten Verschlußklappe 9 erstreckt und an deren Innenseite anliegt. Die Feder 14 stützt sich an der Innenteilwandung 6 so ab und ist derart gespannt, daß der Federsteg 15 die erste Verschlußklappe 9 mit einer vorbestimmten Kraft gegen den Randsteg 13 drückt.

Parallel zu der ersten Klappenachse 8 und gegenüber dieser nur wenig horizontal versetzt ist im unteren Bereich des Innenteils 4 eine zweite Klappenachse 17 angeordnet und fixiert. An dieser zweiten Klappenachse 17 ist eine zweite Verschlußklappe 18 über Lagerstege 19, 20 schwenkbar gelagert. Auch die zweite Verschlußklappe 18 ist tellerartig geformt und liegt in der Schließstellung (Figuren 1 bis 4) von unten an einem Randsteg 21 an, der eine zweite Einstecköffnung 22 im unteren Bereich des Innenteils 4 umgibt. In gleicher Weise wie bei der ersten Verschlußklappe 9 ist die zweite Klappenachse 17 von den Windungen einer Feder 23 umgeben, die mittig einen Federsteg 24 ausbildet, welcher an der Unterseite der zweiten Verschlußklappe 18 anliegt. Auch diese Feder 23 stützt sich an dem Innenteil 4 ab und ist so gespannt, daß sie die zweite Verschlußklappe 18 in Schließstellung mit einer vorbestimmten Kraft gegen den Randsteg 21 drückt.

Im Bereich der offenen Seite der Innenteilwandung 6 ist ein Belüftungsventil 25 angeordnet. Das Belüftungsventil 25 hat im unteren Bereich des Innenteils 4 einen ringförmigen Ventilsitz 26, an dem in Schließstellung von oben ein Ventilteller 27 abdichtend anliegt. Der Ventilsitz 26 wird von einer Bypaßöffnung 28 durchsetzt, die in geöffneter Stellung des Belüftungsventils 25 eine Verbindung zwischen Durchflußkanal 7 und dem sich an den Tankverschluß 1 anschließenden Tankstutzen und damit dem Tank herstellt.

An die Oberseite des Ventiltellers 27 ist ein Führungsschlitten 29 angeformt, der an den Innenseiten der Innenteilwandung 6 vertikal verschieblich geführt ist. Im oberen Bereich weist der Führungsschlitten 29 zwei gegeneinander gerichtete Vorsprünge 30, 31 auf, die von Betätigungsstegen 32, 33 unterfaßt werden. Die Betätigungsstege 32, 33 sind starr mit den Lagerstegen 10, 11 und folglich der ersten Verschlußklappe 9 verbunden und so geformt, daß sie bei einer Verschwenkung der ersten Verschlußklappe 9 in Richtung auf deren Offenstellung, also nach innen, die Vorsprünge 30, 31 und damit auch den Führungsschlitten 29 mit dem Ventilteller 27 nach oben mitnehmen, also vertikal nach oben verschieben. Auf diese Weise hebt der Ventilteller 27 von dem Ventilsitz 26 ab und öffnet damit das Belüftungsventil 25. Dies wiederum hat zur Folge, daß über die Bypaßöffnung 28 ein Druckausgleich zwischen Tank einerseits und Außenatmosphäre andererseits erreicht wird, wenn eine Zapfpistole durch Verschwenkung der ersten Verschlußklappe 9 in den Durchflußkanal 7 eingesteckt wird, und zwar bevor das freie Ende der Zapfpistole die zweite Verschlußklappe 18 erreicht.

An die Unterseite des Ventiltellers 27 ist eine Führungsstange 34 angeformt. Im Bereich ihres freien, unteren Endes ist die Führungsstange 34 von einem Führungsring 35 umschlossen, der ebenfalls einen Schlitten ausbildet, welcher vertikal verschieblich an einer Schlittenführung 36 geführt ist, die an der Unterseite des Innenteils 4 angeformt ist. Die Schlittenführung 36 und der Führungsring 35 sorgen zusammen mit dem Führungsschlitten 29 für eine exakt vertikale Führung des Ventiltellers 27. Dabei sitzt der Führungsring 35 auf dem verbreitert ausgebildeten, nach unten über den Führungsring 35 vorstehenden Ende der Führungsstange 34 auf.

Die Führungsstange 34 ist von einer Schraubenfeder 37 umgeben, die sich untenseitig auf dem Führungsring 35 und obenseitig an einer plattenförmigen Anschlageinrichtung 38 abstützt, welche sich wiederum an der Unterseite des Innenteils 4 abstützt. Da die Schraubenfeder 37 auf Druck beansprucht ist, ist sie bestrebt, den Ventilteller 27 auf den Ventilsitz 26 zu drücken, d.h. beim Abheben des Ventiltellers 27 von dem Ventilsitz 26 wird der Führungsring 35 über die Führungsstange 34 nach oben mitgenommen und komprimiert auf diese Weise die Schraubenfeder 37. Das Abheben ist auch bei geschlossener erster Verschlußklappe 9 möglich und wird selbsttätig dann bewirkt, wenn sich im Tank ein entsprechender Überdruck bildet und auf den Ventilteller 27 einwirkt.

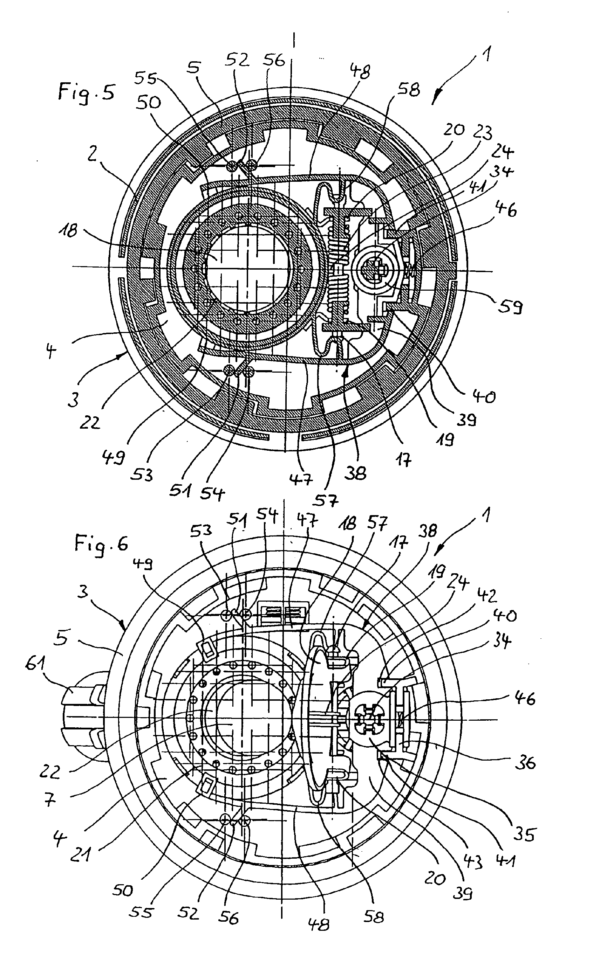

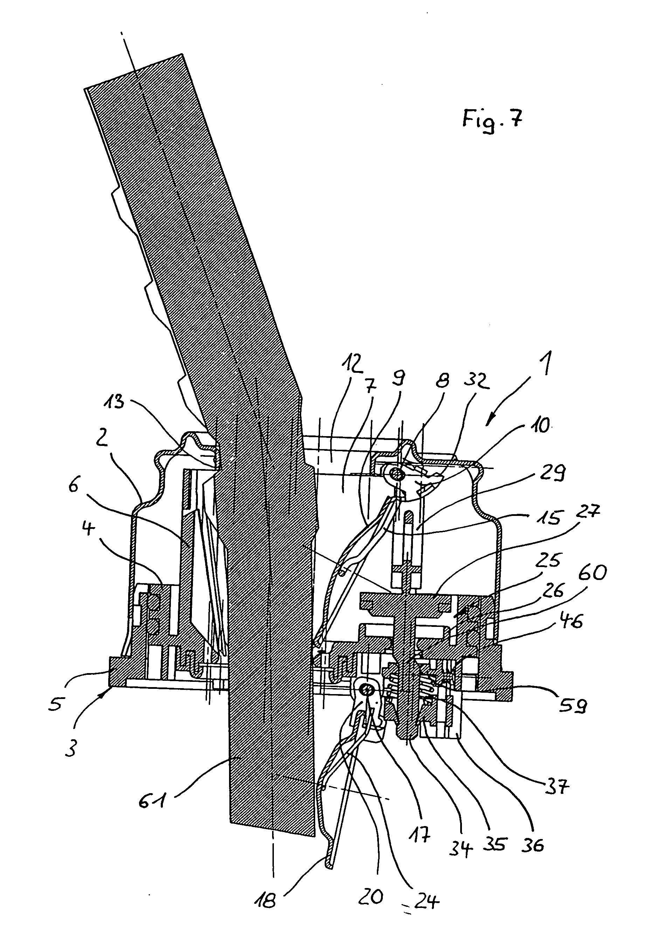

Wie in insbesondere aus den Figuren 2 und 3 sowie 5 und 6 zu ersehen ist, weist die Anschlageinrichtung 38 eine Basisplatte 39 auf, die über die Schraubenfeder 37 an der Unterseite des Innenteils 4 angeformte Stege angedrückt wird. Wie insbesondere aus den Figuren 5 und 6 zu ersehen ist, faßt die Basisplatte 39 mit Führungsschlitzen 42, 43 in vorspringende Führungsstege 44, 45 der Schlittenführung 36 ein. Auf diese Weise ist die Basisplatte 39 und damit die Anschlageinrichtung 38 horizontal, d.h. in einer zur Ebene der zweiten Einstecköffnung 22 parallelen Ebene sowie in Richtung auf den Mittelpunkt der Einstecköffnung 22 verschieblich geführt. Durch eine Horizontalfeder 46 ist die Anschlageinrichtung 38 in dieser Richtung vorgespannt.

Von den seitlichen Enden der Basisplatte 39 gehen elastisch federnde Anschlagarme 47, 48 aus, die zu beiden Seiten der zweiten Einstecköffnung 22 verlaufen und an ihren freien Enden nach innen gerichtete Anschläge 49, 50 aufweisen. Die Anschlagarme 47, 48 haben nach außen vorspringende Führungsstege 51, 52, die jeweils zwischen zwei von dem Innenteil 4 vorspringenden Führungszylindern 53, 54 bzw. 55, 56 einfassen, die jeweils Kulissenführungen für die Führungsstege 51, 52 bilden. Im Bereich der Basisplatte 39 sind an die Anschlagarme 47, 48 mäanderförmig verlaufende Federelemente 57, 58 angeformt, die bestrebt sind, die Anschlagarme 47, 48 jeweils nach außen zu biegen.

In der Mitte der Basisplatte 39 ist ein mit ihr fest verbundener Führungsring 59 vorgesehen, der die Führungsstange 34 eng umschließt und an dem die Schraubenfeder 37 anliegt. Die Führungsstange 40 hat in der Vertikalen einen Versatz 60 quer zur zweiten Einstecköffnung 22 nach außen. In der Schließstellung des Belüftungsventils 25 umgibt der Führungsring 59 die Führungsstange 34 unmittelbar oberhalb des Versatzes 60, also zwischen Bypaßöffnung 28 und Versatz 60. Hierdurch nimmt die Anschlageinrichtung 38 eine Stellung ein, in der die Anschläge 49, 50 außerhalb des Bewegungsbereichs der zweiten Verschlußplatte 18 liegen.

Die Funktion des vorbeschriebenen Tankverschlusses 1 beim Einstecken einer Zapfpistole ist wie folgt.

Das Einstecken der in den Figuren 6 bis 8 mit 61 bezeichneten Zapfpistole geschieht über die erste Einstecköffnung 12. Durch unmittelbare Beaufschlagung durch das freie Ende der Zapfpistole 61 wird die erste Verschlußklappe 9 gegen die Wirkung der Feder 14 nach innen verschwenkt. Dabei werden die Vorsprünge 30, 31 und damit der Führungsschlitten 29 und der Ventilteller 27 angehoben, so daß eventueller Überdruck aus dem Tank - sofern er durch das Belüftungsventil 25 noch nicht ausgeglichen ist - über die Bypaßöffnung 28 abgebaut wird, der Tank also Verbindung zur Außenatmosphäre bekommt.

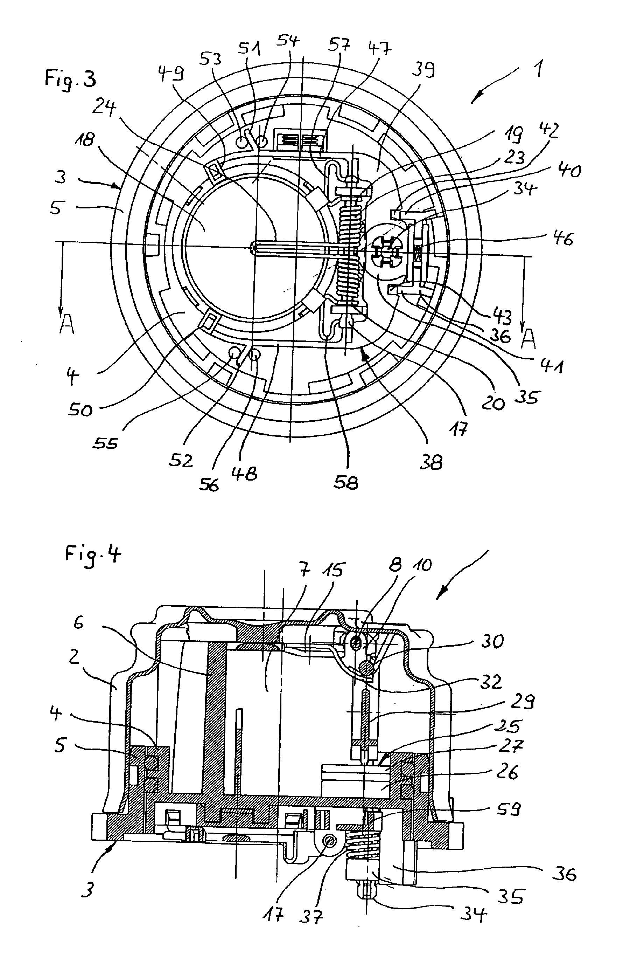

Mit dem Anheben des Ventiltellers 27 wird auch die Führungsstange 34 angehoben. Dabei gleitet der Versatz 60 durch den Führungsring 59 an der Basisplatte 39 und bewirkt hierdurch eine Verschiebung der Anschlageinrichtung 38 in Richtung radial von der zweiten Einstecköffnung 22 weg gegen die Wirkung der Horizontalfeder 46. Dabei werden auch die Anschlagarme 47, 48 entsprechend in ihren jeweiligen Längsrichtungen versetzt. Aufgrund der Formgebung der Führungsstege 51, 52 hat dies zur Folge, daß die Anschlagarme 47, 48 im Bereich der Führungsstege 51, 52 in Richtung auf die zweite Verschlußklappe 18 verbogen werden, wie ein Vergleich zwischen den Figuren 3 und 5 zeigt. Hierdurch werden die Anschläge 49, 50 mit Vorspannung an den Außenrand der zweiten Verschlußklappe 18 gedrückt (Figur 5).

In der Darstellung gemäß Figur 5 befindet sich die zweite Verschlußklappe 18 noch in Schließstellung, d.h. das freie Ende der hier nicht erkennbaren Zapfpistole 61 befindet sich noch in dem Durchflußkanal 7 zwischen den beiden Verschlußklappen 9, 18. Die Figuren 6 und 7 zeigen die Situation nach vollständigem Einstecken der Zapfpistole 61, wobei in Figur 6 von der Zapfpistole 61 nur der außen vorstehende Abschnitt zu sehen ist, während der in dem Durchflußkanal 7 befindliche Abschnitt weggelassen ist. Wie insbesondere aus Figur 7 zu erkennen ist, hat die Zapfpistole 61 auch die zweite Verschlußklappe 18 nach unten gegen die Wirkung der Feder 23 verschwenkt, so daß auch die zweite Einstecköffnung 22 offen ist. Die Verschwenkung der zweiten Verschlußklappe 18 hat zur Folge, daß die Anschläge 49, 50 nach innen in den Bewegungsbereich der zweiten Verschlußklappe 18 verschwenken, wie aus Figur 6 - im Vergleich zu Figur 5 - zu ersehen ist.

Aus Figur 7 ergibt sich auch die vorbeschriebene Offenstellung des Belüftungsventils 25 aufgrund der Verschwenkung der ersten Verschlußklappe 8. Mit der Anhebung des Ventiltellers 27 verbunden ist die Anhebung des Versatzes 60, so daß der Führungsring 59 der Basisplatte 39 die Führungsstange 34 nunmehr unterhalb des Versatzes 60 umschließt mit der Folge, daß der Führungsring 59 und damit die gesamte Anschlageinrichtung 38 um den Versatz 60 nach außen verschoben worden ist.

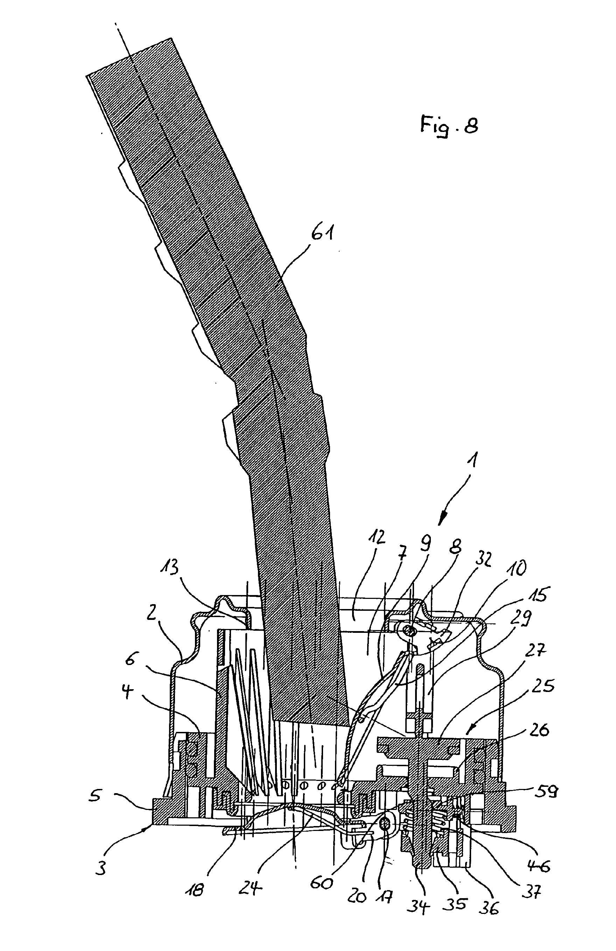

In der Stellung gemäß Figur 7 erfolgt die Befüllung des Tanks über die Zapfpistole 61. Nach dem Befüllvorgang wird die Zapfpistole 61 wieder aus dem Tankverschluß 1 herausgezogen. Figur 8 zeigt die Stellung der Zapfpistole 61 in einer Zwischenstellung nach dem Herausziehen aus der zweiten Einstecköffnung 22, wobei das freie Ende sich noch in dem Durchflußkanal 7 befindet. Da die erste Verschlußklappe 9 von der Zapfpistole 61 noch in der nach innen verschwenkten Stellung gehalten wird, ist auch noch das Belüftungsventil 25 offen, d.h. der Ventilteller 27 befindet sich noch in dem vom Ventilsitz 26 angehobenen Zustand, und der Führungsring 59 umgibt die Führungsstange 34 ebenfalls noch unterhalb des Versatzes 60. Die zweite Verschlußklappe 18 ist freigegeben und deshalb unter Einwirkung der Feder 23 zurückgeschwenkt. Sie wird jedoch durch die in ihren Bewegungsbereich zuvor eingeschwenkten Anschläge 49, 50 (in Figur 8 nicht erkennbar; vgl. Figur 6) daran gehindert, sich in ihre Schließstellung zu bewegen. Dies bedeutet, daß die zweite Einstecköffnung 22 noch offen ist. Eventuell aus der Zapfpistole 61 noch nachfließender Kraftstoff kann deshalb an der zweiten Verschlußklappe 18 vorbei in den Tank abfließen.

Wird die Zapfpistole 61 vollständig herausgezogen, also auch aus der ersten Einstecköffnung 12, verschwenkt die erste Verschlußklappe 9 unter Einwirkung der Feder 14 in Richtung auf die erste Einstecköffnung 12 und kommt schließlich an dem Randsteg 13 zur Anlage. Die Betätigungsstege 32, 33 sind so geformt, daß sie ein Absenken der Führungsschlitten 29 und damit des Ventiltellers 27 auf den Ventilsitz 26 erst im letzten Teil der Verschwenkbewegung der ersten Verschlußklappe 9 ermöglichen. Durch das Absenken des Ventiltellers 27 wird auch die Führungsstange 34 unter der Wirkung der Schraubenfeder 37 abgesenkt mit der Folge, daß der Versatz 60 durch den Führungsring 59 gleitet und ihn wieder in Richtung auf die zweite Einstecköffnung 22 verschiebt. Entsprechend werden die Basisplatte 39 und die Anschlagarme 47, 48 verschoben. Aufgrund der Schrägstellung der Führungsstege 51, 52 hat dies zur Folge, daß die Anschlagarme 47, 48 wieder in die Ausgangsposition gemäß Figur 3 und damit auch die Anschläge 49, 50 nach außen aus dem Bewegungsbereich der zweiten Verschlußklappe 18 verschwenkt werden. Hierdurch wird die zweite Verschlußklappe 18 freigegeben und kommt deshalb unter Einwirkung der Feder 23 in Anlage an den Randsteg 21. Damit haben alle Teile des Tankverschlusses 1 wieder die in den Figuren 1 bis 4 dargestellte Ausgangsposition erreicht.

## Patentansprüche

1. Tankverschluß (1) mit einem ersten und einem zweiten Verschlußglied (9, 18), die durch Einstecken einer Zapfpistole (61) gegen die Wirkung einer Rückstelleinrichtung (14, 23) aus einer Schließ- in eine Offenstellung bewegbar sind, wobei parallel zum zweiten Verschlußglied (18) ein Bypass (28) mit einem darin angeordneten Belüftungsventil (25) vorgesehen ist, das mit dem ersten Verschlußglied (9) derart verbunden ist, daß das Belüftungsventil (25) bei Bewegung des ersten Verschlußgliedes (9) aus dessen Schließstellung in Richtung auf eine Offenstellung ebenfalls aus einer Schließ- in eine Offenstellung bewegt wird und umgekehrt, **dadurch gekennzeichnet, daß** eine Anschlageinrichtung (38) vorgesehen ist, die ein bewegliches Anschlagelement (47-50) aufweist, das wirkungsmäßig derart mit dem ersten Verschlußglied (9) und/oder dem Belüftungsventil (25) verbunden ist, daß das Anschlagelement (47-50) nach Öffnen des zweiten Verschlußgliedes (18) aus einer Ausgangsstellung so in den Bewegungsbereich des zweiten Verschlußgliedes (18) einfährt, daß bei Bewegung des zweiten Verschlußglieds (18) in Schließrichtung dessen vollständiges Schließen verhindert wird und daß das Anschlagelement (47-50) mit der Schließbewegung des ersten Verschlußgliedes (9) wieder in die Ausgangsstellung zurückfährt.

2. Tankverschluß nach Anspruch 1, **dadurch gekennzeichnet, daß** das zweite Verschlußglied (18) unabhängig von dem ersten Verschlußglied beweglich ist.

3. Tankverschluß nach Anspruch 2, **dadurch gekennzeichnet, daß** das zweite Verschlußglied (18) derart angeordnet ist, daß es beim Einstecken der Zaptpistole (61) durch deren direkte Beaufschlagung aus der Schließ- in die Offenstellung bewegbar ist.

4. Tankverschluß nach einem der Ansprüche 1 bis 3, **dadurch gekennzeichnet, daß** das Anschlagelement wenigstens einen Anschlagarm (47-50) aufweist, dessen freies Ende in den Bewegungsbereich des zweiten Verschlußgliedes (18) bewegbar ist.

5. Tankverschluß nach Anspruch 4, **dadurch gekennzeichnet, daß** das Anschlagelement gabelförmig mit zwei Anschlagarmen (47-50) ausgebildet ist, die beide in den Bewegungsbereich des zweiten Verschlußgliedes (18) bewegbar sind.

6. Tankverschluß nach Anspruch 5, **dadurch gekennzeichnet, daß** die Anschlagarme (47-50) in der Ebene des zweiten Verschlußgliedes (18) beweglich geführt sind.

7. Tankverschluß nach Anspruch 6, **dadurch gekennzeichnet, daß** die Anschlagarme (47, 48) biegsam ausgebildet und kulissenartig derart geführt sind, daß sie bei Bewegung aus ihrer Ausgangsstellung in den Bewegungsbereich des zweiten Verschlußgliedes (18) gebogen werden.

8. Tankverschluß nach einem der Ansprüche 1 bis 7, **dadurch gekennzeichnet, daß** das Anschlagelement (47-50) kinematisch mit dem Belüftungsventil (25) verbunden ist.

9. Tankverschluß nach Anspruch 8, **dadurch gekennzeichnet, daß** das Belüftungsventil einen Ventilstößel (34) aufweist, der mit dem Anschlagelement (47, 50) verbunden ist.

10. Tankverschluß nach Anspruch 9, **dadurch gekennzeichnet, daß** der Ventilstößel (34) kinematisch mit dem ersten Verschlußglied (9) verbunden ist.

11. Tankverschluß nach Anspruch 9 oder 10, **dadurch gekennzeichnet, daß** der Ventilstößel (34) sich senkrecht zu den Ebenen der Verschlußglieder (9, 18) in deren Schließstellung erstreckt.

12. Tankverschluß nach Anspruch 11, **dadurch gekennzeichnet, daß** Anschlagelement (47-50) und Ventilstößel (34) derart miteinander verbunden sind, daß eine Bewegung des Ventilstößels (34) in Öffnungsrichtung eine Verschiebung des Anschlagelements (47-50) in der Ebene des zweiten Verschlußgliedes (18) in dessen Schließstellung bewirkt und umgekehrt.

13. Tankverschluß nach Anspruch 12, **dadurch gekennzeichnet, daß** Anschlagelement (47-50) und Ventilstößel (34) über gegenseitige Schiebeelemente (59, 60) verbunden sind.

14. Tankverschluß nach Anspruch 13, **dadurch gekennzeichnet, daß** das anschlagelementseitige Schiebeelement (49) den Ventilstößel (34) formschlüssig umschließt und der Ventilstößel (34) eine Krümmung (60) aufweist, die bei Bewegung des Ventilstößels (34) eine Verschiebung des Anschlagelements (47-50) bewirkt.

15. Tankverschluß nach einem der Ansprüche 1 bis 14, **dadurch gekennzeichnet, daß** das Anschlagelement (47-50) in Richtung seiner Ausgangsstellung federbeaufschlagt ist.
